# EUROPEAN PATENT SPECIFICATION

(11) **EP 1 298 172 B1**
(45) Date of publication and mention of the grant of the patent: **17.01.2007**
(21) Application number: 02256640.0
(22) Date of filing: 25.09.2002
(51) Int. Cl.: C08L 67/02, C08L 67/00, F21V 7/00

(54) **Metallized polyester composition**
Metallisierte Polyesterzusammensetzung
Composition de polyester métallisée

(30) Priority: 28.09.2001 US 966351
(43) Date of publication of application: 02.04.2003
(73) Proprietor: GENERAL ELECTRIC COMPANY, Schenectady, NY 12345 (US)
(72) Inventor: Mercx, Franciscus Petrus, 4611 HH Bergen op Zoom (NL); Willems, Johannes Gerardus Henricus, 4661 MD Halsteren (NL); Van Baal, Harry, 4464 BA Goes (NL); Van Loenen, Erik, 4822 XB Breda (NL)
(74) Representative: Szary, Anne Catherine

(56) References cited:
- DE-A- 1 694 198
- US-A- 4 268 570
- US-A- 4 487 862
- US-A- 4 699 942
- US-A- 6 165 610
- "Roempp Lexikon Online" 2005, GEORG THIEME VERLAG , HTTP://WWW.ROEMPP.COM

## Description

This invention relates to a metallized polyester molded article for use in automotive headlamp housings, such as bezels and reflectors

Direct metallization of automotive headlamp housings, such as bezels and reflectors, is preferred by automotive manufacturers since it significantly reduces production costs. Flawless surface appearance is a critical requirement for direct metallization since even small surface defects are considerably enhanced after metallization. In addition with the advent of hotter lamps and new styling technologies, high heat resistance is becoming increasingly important. Headlamp bezels typically now require heat stability at temperatures above 150°C. At these higher temperatures, rainbow and haze effects may develop on the surface. A rainbow effect is an unwanted color prismatic effect when the metallized part is viewed under an angle of 10 to 90 degrees. A haze effect is a deposit, typically milky white, which dulls the metallized layer. This effect decreases the reflectivity of the metallized surface.

US Patent No. 3,953,394 to Fox describes alloys of poly(butylene terephthalate) [PBT] and poly(ethylene) terephthalate [PET] containing 1-80% by weight of glass or mineral filler. US Patent No. 4,351,758 to Lu et al. describe PBT and PET mixtures containing 4-65 weight percent of reinforcing agent including mineral fillers and 0.1-20 weight percent of a nucleating agent such as an alkali metal salt with anions that are oxides of elements from Group IV of the Periodic Table, talc and barium sulfate that yield smooth, glossy surfaces and high heat deflection temperatures when molded at temperatures below 110°C. US Patent No. 5,149,734 to Fisher et al. describe compositions consisting essentially of PBT, PET and 50-75 weight percent of barium sulfate filler of particle size ranging from 0.05 to 50 micron for smooth, glossy surface appearance.

Polyester compositions containing various ingredients including a high level of reinforcing agents can provide the heat resistance required. However, the inclusion of fillers can be detrimental to achieving a smooth surface. Excellent dispersion of filler is very critical to obtain a smooth, flawless surface. Moreover, the use of high filler levels significantly increases the specific gravity of the composition, thereby elevating the cost per unit volume of the product. Hence, it is desirable to provide resins with high heat resistance and low specific gravity without detracting from desirable surface properties that contribute to good appearance and ease of metallization. In addition, it is also desirable to provide resin compositions that do not develop haze and rainbow effects when exposed to high temperatures.

The present invention provides a metallized molded polyester article containing a non-blooming mold release agent or lubricant comprising olefinic monomeric units. The molded resin composition provides an excellent surface for direct metallization and develops no or negligible haze and rainbow effects when the metallized part is exposed to heat aging at a temperature of 150°C - 185 °C. The non-blooming release agent does not migrate through the metallized layer so that deleterious rainbow and haze effects are avoided. A typical blooming mold release agent, such as pentaerythritol tetrastearate, can migrate through the metallized layer at temperatures on the order of 150 °C resulting in a rainbow or haze effect.

US patent application No. 09/708,928, filed November 8, 2000 to Talibuddin describes nucleated polyester resins with heat deflection temperatures above 160°C.

The metallized polyester molded article contains a non-blooming release agent or lubricant based on olefinic monomeric units. A metallized molded resin article, based on the weight of the total resin composition, consists essentially of from 70 to 99.9 weight percent, preferably 90 to 99.9 weight percent of a polyester crystallizable resin derived from aliphatic, cycloaliphatic diols, or mixtures thereof, containing 2 to 10 carbon atoms and at least one aromatic dicarboxylic acid wherein the aromatic group is a C₆ to C₂₀ aryl radical.

### DESCRIPTION OF THE PREFERRED EMBODIMENTS

The polyester component includes crystallizable resins derived from aliphatic or cycloaliphatic diols, or mixtures thereof, containing 2 to 10 carbon atoms and at least one aromatic dicarboxylic acid wherein the aromatic group is a C₆ to C₂₀ aryl radical. The polyester is preferably a poly (alkylene terephthalate) and is most preferably poly (butylene terephthalate).

The "non-blooming" polymeric release agent/lubricant is composed of olefinic monomeric units, e.g. polyolefins, poly-ethylene vinyl acetate (EVA), poly-ethylene ethyl acrylate (EEA). Preferred mold release agents/lubricants have a sufficiently high molecular weight that migration through the metallized layer at temperatures of operation, such as at least 150 °C, will not take place. The most preferred release agent/lubricant is polyethylene (PE). The total amount of release agent/lubricant is preferably from 0.1 to 10% by weight, with the most preferred level being about 0.5 to about 2 percent by weight based on the total weight of the resin component of the article. It is desirable to have a sufficient amount of release agent/ lubricant so that the molded part releases properly from the mold. Typically molding techniques are by injection molding. Increased concentrations of release agent/lubricant may deleteriously affect the adherence of the deposited metallized layer and/or can give rise to mold deposit formation upon long molding cycles and should be avoided.

Nucleating agents, fillers, primary and/or secondary antioxidants might be added to improve heat resistance, to increase cycle times to reduce production costs or to improve color stability. Additionally other types of release agent might be present as long as they will not give rainbow or haze effects. The metallization is carried out under a vacuum using techniques known in the art. Preferably the metal used is aluminum, particularly for a vehicle lamp. After metallization a protective coating can be applied. Preferably a polydimethylsiloxane coating obtained via plasma polymerization of dimethylsiloxane is applied.

Preferred nucleating agents can be compounds that are oxides, sulfates, silicates of elements from Group I, II, and IV of the Periodic Table or fibrillar PTFE, and mixtures thereof. The most preferred nucleating agent is talc or barium sulfate with talc being preferred over barium sulfate. Inorganic nucleants can at higher levels also act as a filler, which might be desirable. Besides those nucleating fillers, also other fillers, including those with an aspect ratio>3, e.g. chopped glass fibers, can be used provided that they do not interfere with the surface quality of the metallized part. The level of the nucleating agent in the polymer mixture is 0.0-20 weight percent of the composition, with the preferred level being 0.05 to 5 and the most preferred level being 0.1 to 1 weight percent of the total composition. The average particle size of the nucleating agent should range from 0.1 to 20 micron, with the preferable average particle size being within 0.1 to 10 micron and the most preferred average particle size being within 0.1 to 1 micron. Preferred compositions of the resin component consist essentially of 96, preferably 98 percent by weight polyester based on the weight percent of the resin component.

The composition of the present invention may include additional components, such as colorants, primary and/or secondary antioxidants, which do not interfere with the previously mentioned desirable properties. Any additional ingredients, other than the polyester, release agent/lubricant and nucleating agent, are desirably present in an amount less than 5 %, preferably less than 2% by weight based on the total weight of the resin.

Preferred crystalline thermoplastic polyesters are polyesters derived from an aliphatic or cycloaliphatic diol, or mixtures thereof, containing from 2 to 10 carbon atoms and at least one aromatic dicarboxylic acid. Preferred polyesters are derived from an aliphatic diol and an aromatic dicarboxyl ic acid having repeating units of the following general formula: 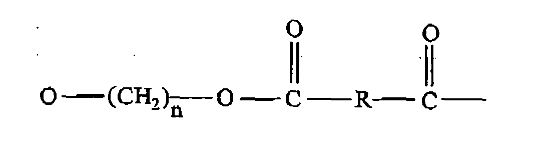 wherein n is an integer of from 2 to 6. R is a C₆-C₂₀ aryl radical comprising a decarboxylated residue derived from an aromatic dicarboxylic acid.

Examples of aromatic dicarboxylic acids represented by the decarboxy lated residue R are isophthalic or terephthalic acid, 1,2-di(p-carboxyphenyl)ethane, 4,4'-dicarboxydiphenyl ether, 4,4' bisbenzoic acid and mixtures thereof. All of these acids contain at least one aromatic nucleus. Acids containing fused rings can also be present, such as in 1,4-1,5- or 2,6-naphthalene dicarboxylic acids. The preferred dicarboxylic acids are terephthalic acid, isophthalic acid, naphthalene dicarboxylic acid or mixtures thereof.

Typical polyesters are poly(ethylene terephthalate) ("PET"), and poly(1,4-butylene terephthalate), ("PBT"), poly(ethylene naphthanoate) ("PEN"), poly(butylene naphthanoate), ("PBN"), (polypropylene terephthalate) ("PPT") and poly(cyclohexanedimethanol terephthalate) ("PCT").

Also contemplated herein are the above polyesters with minor amounts, e.g., from 0.5 to 5 percent by weight, of units derived from aliphatic acid and/or aliphatic polyols to form copolyesters. The aliphatic polyols include glycols, such as poly(ethylene glycol). Such polyesters can be made following the teachings of, for example, U.S. Pat. Nos. 2,465,319 and 3,047,539.

The preferred poly(1,4-butylene terephthalate) resin used in this invention is obtained by polymerizing a glycol component at least 70 mol %, preferably at least 80 mol %, of which consists of tetramethylene glycol and an acid component at least 70 mol %, preferably at least 80 mol %, of which consists of terephthalic acid, or polyester-forming derivatives thereof.

The polyesters used herein preferably have an intrinsic viscosity of from 0.4 to 2.0 dl/ g as measured in a 60:40 phenol/tetrachloroethane mixture or similar solvent at 23-30°C.

Preferred polyesters are crystalline polyesters having a melting point from 150 to 300°C with the most preferred polyester melting between 180 and 250°C.

The resin mixture may typically comprise additional ingredients which may be added to contribute to desirable properties previously mentioned which include good mechanical properties, color stability, oxidation resistance, good flame retardancy, good processability, i.e. short molding cycle times, good flow and easy release from a mold, and good metallization properties.

The method of blending the compositions can be carried out by conventional techniques. One convenient method comprises blending the polyester and nucleating agent, and other ingredients in powder or granular form, extruding the blend under temperatures sufficient to melt the polyester and comminuting into pellets or other suitable shapes. The ingredients are combined in any usual manner, e.g., by dry mixing or by mixing in the melted state in an extruder, in a heated mill or in other mixers.

Although it is not essential, best results are obtained if the ingredients are pre-compounded, pelletized and then molded. Pre-compounding can be carried out in conventional equipment. For example the polyester resin and other additives can be added to the throat of a single screw extruder having a mixing screw with a long transition section to ensure proper melting. On the other hand, a twin screw extrusion machine can be fed with resins and additives at the feed port at the throat or down stream. Other compounding variations are within the scope of this invention.

The pre-compounded composition can be extruded and cut or chopped into molding compounds, such as conventional granules, pellets, etc. by standard techniques. The granulate is molded into parts using standard molding techniques and conditions.

### EXAMPLES

### Examples 1-7

The components of the formulations presented in Table 1 were tumbled blended and then extruded on a WP25 twin-screw extruder equipped with a vacuum vent. A processing profile of 250-265°C from feed-zone to die-head was employed. The compositions were dried at 110-120 °C for 2- 4 hours and then injection molded into a 120 x 50 x 3 mm plaque on a 100 tons Netstal injection molding machine with a barrel set temperature of 240 - 260 °C. Other processing settings were: Mold temperature 50 °C, 20 mm/s injection speed (resulting in a injection time of approx. 1.44 seconds), 400 bars of after pressure during 5 seconds and 5 bars of hydraulic backpressure. All of these settings resulted in a cycle time of about 25.3 seconds, injection pressure of ± 800 bars and a residence time of 3.4 minutes. The plaques molded from Comparative example A and B and Examples 1-7 under the molding conditions described above were metallized with aluminum using a vacuum deposition process. After the metallization process, a protective transparent coating of polydimethylsiloxane was applied via plasma polymerization of dimethylsiloxane.

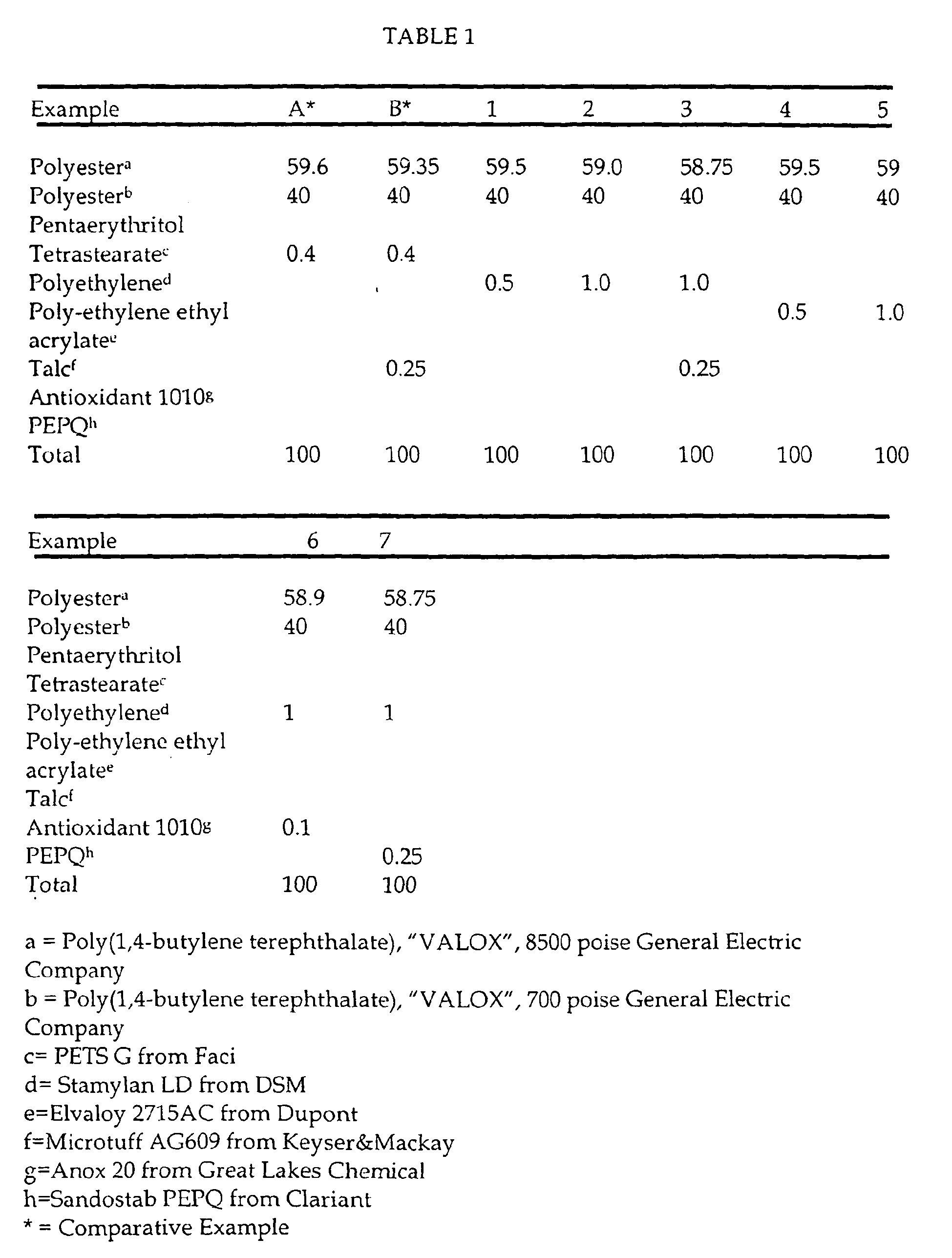

### Example 8-12

The examples 8-12 and comparative example C (table 2) were prepared in the same way as described above for examples 1-7 and comparative examples A and B.

**TABLE 2**

| Example | C* | 8 | 9 | 10 | 11 | 12 |
|---|---|---|---|---|---|---|
| Polyester^{a} | 58.1381 | 58.2381 | 59.5 | 57.9131 | 57.7881 | |
| | 58.5381 | | | | | |
| Polyester^{b} | 40 | 40 | 40 | 40 | 40 | 40 |
| Pentaerythritol | | | | | | |
| Tetrastearate^{c} | 0.4 | | | | | |
| Polyethylene^{d} | | 0.5 | 0.5 | 0.75 | 0.75 | 1.0 |
| Talc^{e} | 0.25 | 0.05 | 0.25 | 0.125 | 0.25 | 0.25 |
| Antioxidant 1010^{f} | 0.06 | 0.06 | 0.06 | 0.06 | 0.06 | 0.06 |
| TiO2^{g} | 1.1 | 1.1 | 1.1 | 1.1 | 1.1 | 1.1 |
| Pigment blue^{h} | 0.0001 | 0.0001 | 0.0001 | 0.0001 | 0.0001 | |
| | 0.0001 | | | | | |
| Pigment yellow 53ⁱ | 0.05 | 0.05 | 0.05 | 0.05 | 0.05 | 0.05 |
| Carbon black^{j} | 0.0018 | 0.0018 | 0.0018 | 0.0018 | 0.0018 | |
| | 0.0018 | | | | | |
| Total | 100 | 100 | 100 | 100 | 100 | 100 |

| | | | | | | |
|---|---|---|---|---|---|---|
| a = Poly(1,4-butylene terephthalate), "VALOX", 8500 poise General Electric Company b = Poly(1,4-butylene terephthalate), "VALOX", 700 poise General Electric Company c= PETS G from Faci d= Stamylan LD from DSM e=Microtuff AG609 from Keyser&Mackay f=Anox 20 from Great Lakes Chemical g=Rutile TiO2 from Huntsman(Tioxide) h=Ultramarine Blue from Holliday Pigments Ltd. i=Pigment Yellow 53 from BASF j=Pigment Black 7 from Cabot * = Comparative Example | | | | | | |

### Results from Examples 1-7

Metallized plaques (including protective PDMS coating) were visually inspected after heat treatment at 160°C for 1 hour and judged on haze and rainbow effects. The following rating was applied:
1= severe rainbow or haze
2= moderate or slight rainbow or haze
3= no detectable or insignificant traces of rainbow or haze.

| Example | A | B | 1 | 2 | 3 | 4 | 5 | 6 | 7 |
|---|---|---|---|---|---|---|---|---|---|
| Haze | 1 | 1 | 3 | 3 | 3 | 3 | 3 | 3 | 3 |
| Rainbow | 2 | 1 | 3 | 3 | 3 | 3 | 3 | 3 | 3 |

Examples 1-7, which contain polyethylene (PE) or ethylene ethyl acrylate show no detectable or insignificant traces of rainbow and haze compared to the comparative examples A and B, which contain pentaerythritol tetrastearate (PETS) as release agent. PE is particularly effective in reducing the haze and rainbow phenomena when nucleated formulations are used as can be inferred upon comparing examples 3 and 4 to the comparative example B. Interestingly the inclusion of primary antioxidants like 1010 and secondary stabilizers like PEPQ does not negatively affect the surface appearance (haze and rainbow) after metallization and heat treatment.

### Results from Examples 8-12

Metallized plaques (including protective PDMS coating) were visually inspected after heat treatment at 160°C for 1 hour and judged on haze and rainbow effects. The following rating was applied:
1= severe rainbow or haze
2= moderate or slight rainbow or haze
3= no detectable or insignificant traces of rainbow or haze.

| Example | | C | 8 | 9 | 10 | 11 | 12 |
|---|---|---|---|---|---|---|---|
| | Haze | 1 | 3 | 3 | 3 | 3 | 3 |
| | Rainbow | 1 | 3 | 3 | 3 | 3 | 3 |

Examples 8-12, containing polyethylene (PE) as release/lubricant as well as talc nucleation, show no detectable or insignificant rainbow and haze compared to the comparative example C based on PETS and talc nucleation. Interestingly, the inclusion of the color package to render the base material light grey, does not adversely affect the surface appearance (haze and rainbow) after metallization and heat treatment.

The above examples clearly show that polyester resins can be used to produce high heat, directly metallizable molded products that develop no or negligible rainbow and haze effects after heat treatment at 160°C, when release/lubricant based on polyolefin moieties are used.

## Claims

1. A metallized molded resin article, consisting essentially of
a) from 70 to 99.9 weight percent, based on the total weight of the resin composition, of a crystallizable polyester resin derived from aliphatic or cycloaliphatic diols, or mixtures thereof, containing 2 to 10 carbon atoms and at least one aromatic dicarboxylic acid wherein the aromatic group is a C₆ to C₂₀ aryl radical
b) a non-blooming polymeric release agent/lubricant is selected from the group consisting of polyethylene, poly-ethylene vinyl acetate (EVA), poly-ethylene ethyl acrylate (EEA) and mixtures thereof
c) optionally, from 0 to 20 percent by weight nucleants and/or fillers,
d) less than 5% by weight additional ingredients based on the total weight of the resin composition,
a portion of the surface of said article being metallized.

2. A metallized molded resin article according to claim 1 wherein the release agent/lubricant is present in an amount from 0.3 to 2 percent by weight based on the total weight of the resin component of the article.

3. A metallized molded resin article according to any preceding claim wherein the metallization is carried out under a vacuum.

4. A metallized molded resin article according to any preceding claim wherein the metallized article comprises aluminum.

5. A metallized molded resin article according to any preceding claim wherein the metallized article comprises a reflective vehicle lamp part.

6. A metallized molded resin article according to any preceding claim wherein the crystallizable polyester resin component is selected from the group consisting essentially of poly(ethylene terephthalate), poly(1,4-butylene terephthalate), poly(ethylene naphthanoate), poly(butylene naphthanoate), poly(cyclohexane dimethanol terephthalate), (polypropylene terephthalate) and mixtures thereof.

7. A process for making a metallized molded resin article comprising the steps of a) forming a resin mixture consisting essentially from 70 to 99.9 weight percent, based on the total weight of the resin composition, of a crystallizable polyester resin derived from aliphatic or cycloaliphatic diols, or mixtures thereof, containing 2 to 10 carbon atoms and at least one aromatic dicarboxylic acid wherein the aromatic group is a C₆ to C₂₀ aryl radical, a polymeric release agent / lubricant is selected from the group consisting of polyethylene, poly-ethylene vinyl acetate (EVA), poly-ethylene ethyl acrylate (EEA) and mixtures thereof and the remaining amount consisting essentially of one or more nucleants and less than 5% by weight additional ingredients based on the total weight of the resin composition; b) molding said resin mixture in a mold, and c) metallizing a portion of the surface of said article.

## Patentansprüche

1. Metallisierter Formmassengegenstand, bestehend im Wesentlichen aus
(a) 70 bis 99,9 Gew.-%, bezogen auf das Gesamtgewicht der Formmassenzusammensetzung, eines kristallisierbaren Polyesterharzes abgeleitet von aliphatischen oder cycloaliphatischen Diolen, oder Mischungen davon, enthaltend 2 bis 10 Kohlenstoffatome, und wenigstens einer aromatischen Dicarbonsäure, worin die aromatische Gruppe ein C₆ bis C₂₀ Arylrest ist
(b) einem nicht-ausblühenden polymeren Entformungsmittel/Gleitmittel, welches ausgewählt ist aus der Gruppe bestehend aus Polyethylen, Polyethylenvinylacetat (EVA), Polyethylenethylarcylat (EEA) und Mischungen davon.
(c) gegebenenfalls 0 bis 20 Gew.-% Nukleinierungsmittel und/oder Füllstoffe,
(d) weniger als 5 Gew.-% zusätzlicher Inhaltsstoffe bezogen auf das Gesamtgewicht der Formmassezusammensetzung,
wobei ein Abschnitt der Oberfläche des Gegenstandes metallisiert ist.

2. Metallisierter Formmassengegenstand nach Anspruch 1, wobei das Entformungsmittel/Gleitmittel in einer Menge von 0,3 bis 2 Gew.-% vorhanden ist, bezogen auf das Gesamtgewicht des Formmassebestandteils des Gegenstandes.

3. Metallisierter Formmassengegenstand nach einem der vorhergehenden Ansprüche, wobei die Metallisierung unter einem Vakuum ausgeführt wird.

4. Metallisierter Formmassengegenstand nach einem der vorhergehenden Ansprüche, wobei der metallisierte Gegenstand Aluminium aufweist.

5. Metallisierter Formmassengegenstand nach einem der vorhergehenden Ansprüche, wobei der metallisierte Gegenstand ein reflektierendes Fahrzeuglampenteil umfasst.

6. Metallisierter Formmassengegenstand nach einem der vorhergehenden Ansprüche, wobei der kristallisierbare Polyesterbestandteil ausgewählt ist aus der Gruppe bestehend im Wesentlichem aus Poly(ethylenterephthalat), Poly(1,4-buylenterephthalat), Poly(ethylennaphtanoat), Poly(butylennaphthanoat), Poly(cyclohexandimethanolterephthalat), (Polypropylenterephthalat) und Mischungen davon.

7. Verfahren zur Herstellung eines Metallisierter Formmassengegenstand umfassend die Schritte, dass man a) eine Formmassenmischung herstellt, bestehend im Wesentlichem aus 70 bis 99,9 Gew.-% bezogen auf das Gesamtgewicht der Formmassenzusammensetzung eines kristallisierbaren Polyesterharzes abgeleitet von aliphatischen oder cycloaliphatischen Diolen oder Mischungen davon, enthaltend 2 bis 10 Kohlenstoffatome, und wenigstens einer aromatischen Dicarbonsäure, wobei die aromatische Gruppe ein C₆ bis C₂₀ Arylrest ist, einem polymeren Entformungsmittel/Gleitmittel, das ausgewählt ist aus der Gruppe bestehend aus Polyethylen, Polyethylenvinylacetat (EVA), Polyethylenethylacrylat (EEA) und Mischungen davon und die restliche Menge im Wesentlichem aus einem oder mehreren Nukleinierungsmitteln und weniger als 5 Gew.-% zusätzlicher Inhaltsstoffen besteht, bezogen auf das Gesamtgewicht der Formmassenzusammensetzung; b) die Formmassenmischung in eine Form gießt, und c) einen Abschnitt der Oberfläche des Gegenstandes metallisiert.

## Revendications

1. Article moulé en résine métallisé, constitué principalement par :
a) 70 à 99,9 pour-cent en poids, sur la base du poids total de la composition de résine, d'une résine polyester pouvant cristalliser dérivée de diols aliphatiques ou cycloaliphatiques, ou de mélanges de ceux-ci, contenant 2 à 10 atomes de carbone et au moins un acide dicarboxylique aromatique dans lequel le groupe aromatique est un radical aryle en C₆ à C₂₀,
b) un agent de démoulage polymère non opacifiant/lubrifiant qui est sélectionné à partir du groupe constitué par le polyéthylène, le polymère d'éthylène et acétate de vinyle (EVA), le polymère d'éthylène et acrylate d'éthyle (EEA) et leurs mélanges,
c) en variante, 0 à 20 pour-cent en poids d'agents de nucléation et/ou éléments de charge,
d) moins de 5% en poids d'ingrédients additionnels sur la base du poids total de la composition de résine,
une partie de la surface dudit article étant métallisée.

2. Article moulé en résine métallisé selon la revendication 1 dans lequel l'agent de démoulage/lubrifiant est présent en une quantité de 0,3 à 2 pour-cent en poids sur la base du poids total du composant de résine de l'article.

3. Article moulé en résine métallisé selon l'une quelconque des revendications précédentes dans lequel la métallisation est réalisée sous vide.

4. Article moulé en résine métallisé selon l'une quelconque des revendications précédentes dans lequel l'article métallisé comprend de l'aluminium.

5. Article moulé en résine métallisé selon l'une quelconque des revendications précédentes dans lequel l'article métallisé comprend une pièce de feu de véhicule réfléchissante.

6. Article moulé en résine métallisé selon l'une quelconque des revendications précédentes dans lequel le composant à base de résine polyester pouvant cristalliser est sélectionné parmi le groupe constitué principalement par le poly(éthylène téréphtalate), le poly(1,4-butylène téréphtalate), le poly(éthylène naphthanoate), le poly(butylène naphthanoate), le poly(cyclohexane diméthanol téréphtalate), le (polypropylène téréphtalate) et leurs mélanges.

7. Procédé de fabrication d'un article moulé en résine métallisé comprenant les étapes de a) formation d'un mélange de résine constitué principalement par 70 à 99,9 pour-cent en poids, sur la base du poids total de la composition de résine, d'une résine polyester pouvant cristalliser dérivée de diols aliphatiques ou cycloaliphatiques, ou de leurs mélanges, contenant de 2 à 10 atomes de carbone et au moins un acide dicarboxylique aromatique dans lequel le groupe aromatique est un radical aryle en C₆ à C₂₀, un agent de démoulage polymère/lubrifiant qui est sélectionné à partir du groupe constitué par le polyéthylène, le polymère d'éthylène et acétate de vinyle (EVA), le polymère d'éthylène et acrylate d'éthyle (EEA) et leurs mélanges, et le reste consistant principalement en un ou plusieurs agents de nucléation et moins de 5% en poids d'ingrédients additionnels sur la base du poids total de la composition de résine ; b) le moulage dudit mélange de résine dans un moule, et c) la métallisation d'une partie de la surface dudit article.
